# EUROPEAN PATENT SPECIFICATION

(11) **EP 3 969 513 B1**
(45) Date of publication and mention of the grant of the patent: **20.08.2025**
(21) Application number: 20731628.2
(22) Date of filing: 12.05.2020
(51) Int. Cl.: C08L 23/08

(54) **POLYOLEFIN PRESSURE PIPE RESIN**
POLYOLEFINDRUCKROHRHARZ
RÉSINE POLYOLÉFINIQUE DE TUYAU SOUS PRESSION

(30) Priority: 15.05.2019 US 201962848268 P
(43) Date of publication of application: 23.03.2022
(73) Proprietor: Equistar Chemicals, LP, Houston, TX 77010 (US)
(72) Inventor: MEHTA, Sameer D., Houston, TX 77010 (US); DIOH, Ndiba N., Houston, TX 77010 (US)
(74) Representative: LyondellBasell
(86) International application number: PCT/US2020/032497
(87) International publication number: WO 2020/232006

(56) References cited:
- EP-A1- 2 889 323
- EP-A1- 2 935 453
- CABOTCORP: "SPECIALTY CARBON BLACKS FOR PLASTIC PRESSURE PIPE", 1 September 2016 (2016-09-01), XP055714276, Retrieved from the Internet <URL:https://www.cabotcorp.com/-/media/files/brochures/specialty-carbon-blacks/brochure-specialty-carbon-blacks-for-plastic-pressure-pipe.pdf?la=en&rev=b53ec1d9b7c3445988f62b90ad5738db> [retrieved on 20200713]
- AMPACET: "High Performance Pipe Compound Masterbatch | AMPACET CORPORATION", 12 July 2018 (2018-07-12), XP055714277, Retrieved from the Internet <URL:https://www.ampacet.com/faqs/designing-high-performance-pipe-compounds/> [retrieved on 20200713]

## Description

### FIELD OF THE DISCLOSURE

The disclosure relates to polyolefin pipes, and in particular to bimodal polyethylene resins and masterbatches used to improve strength, processability, and production of high performance pipes.

### BACKGROUND OF THE DISCLOSURE

Polyolefins have been frequently used in commercial plastics applications because of their outstanding performance and cost characteristics. These polymers can be either amorphous or highly crystalline, and they are able to behave as thermoplastics, thermoplastic elastomers, or thermosets. As such, polyolefins are easily designed and modified for select applications by properly selecting their molecular structure and molecular weight distribution(s) to obtain a suitable balance of slow crack growth resistance (SCGR), impact strength, and processability in the extrusion processes. As such, polyolefins find use in a staggering array of products, including grocery bags, containers, food storage, toys, adhesives, home appliances, engineering plastics, automotive parts, medical applications and medical devices, including prosthetic implants.

Polyethylene (PE) has become one of the most widely used and recognized polyolefins. Polyethylene compositions can comprise low, high, and ultra high molecular weights polymer chains, or a combination of relatively higher and lower molecular weight components to create a multimodal molecular weight distribution (MWD). Further, the density of the polyethylene or the amount of branches in the monomers can be controlled to extend the use of PE to a wide variety of commercial and consumer applications.

Polyethylene is often highly engineered for rigorous application because it is strong, extremely tough, and very durable. For example, multimodal high density polyethylene (HDPE) has found use in high performance pressure pipe applications due to its chemical and physical resilience, e.g., its impact strength, resistance to slow crack growth, the resistance to sagging, and its ability to withstand thermal extremes. The strength of the final pipe is determined by balancing three key properties: minimum required strength (MRS), resistance to slow crack growth, and resistance to rapid crack propagation. This allows for pipes that have a lighter weight and longer lengths, which provides significant savings in labor and equipment when installing the HDPE pipes. EP 2 889 323 A1 discloses a composition for pipes.

Despite the advances made in modifying HDPE for high performance applications, there is a continued need for the development of PE resins having increased strength and resistance to stress cracking in order to extend the long-term durability of pipes produced therefrom and reducing costs. Thus, what is needed in the art are methods of improving the physical properties of the HDPE resins used in pipe applications, particularly thick-walled pipes, without added production costs or sacrificing the pipe's weight or durability.

### SUMMARY OF THE DISCLOSURE

The present disclosure provides novel pressure pipe resins comprising high density polyethylene (HDPE), in which the pipe has improved physical properties compared to the current generation of high density polyethylene pipe. Specifically, one or more variables of the pipe resin's high density polyethylene base polymer and/or masterbatch are optimized to improve strength and performance for the creation of next generation pressure pipes. Such optimization increases the Minimum Required Strength (MRS) and creep performance of the resulting pipe.

In more detail, the present disclosure is for a newly formulated base polymers and/or carbon black masterbatches used in PE100 pipes to create a new generation of pipe resins, which are stronger, more light weight, and easily processed to form pipes with a PE112 rating. Any of the following combinations thereof can be made to improve the physical properties and performance of the resin:

Changing the density and/or molecular weight of the base polymer for use with the same masterbatches in the current generation of pressure pipes. The base polymer's density, molecular weight, or both may be increased to reach the PE112 designation.

Changing the density and/or molecular weight of the carrier resin in the masterbatch, without changing the carbon black characteristics, for use with the same base polymers in the current generation of pressure pipes. As with the base polymer above, the carrier resin's density, molecular weight, or both may be increased to reach the PE112 designation.

Once modified, the base polymer and masterbatch can be blended to form a resin that can be extruded as the next generation of pipes.

Embodiments and methods disclosed herein include any of the following in any combination(s) of one or more thereof:

A high strength resin with a MRS of at least 11.2 MPa, the high strength resin comprising a bimodal, high molecular weight, high density polyethylene base polymer having a density between 0.947 and 0.952 g/cm³ and a masterbatch comprising a carrier resin and carbon black. The masterbatch has a density between 1.1 and 1.4 g/cm³ and a carbon black with a particle size range of less than 55 nm.

A method of forming a pressure pipe having a MRS of 11.2 MPa comprising extruding a bimodal, high molecular weight, high density polyethylene base polymer having a density between 0.947 and 0.952 g/cm³ in the presence of a masterbatch comprising a carrier resin and carbon black. The masterbatch has a density between 1.1 and 1.4 g/cm³ and a carbon black with a particle size range of less than 55 nm.

A pressure pipe having a MRS of 11.2 MPa prepared by a method comprising extruding a bimodal, high molecular weight, high density polyethylene base polymer having a density between 0.947 and 0.952 g/cm³ in the presence of a masterbatch comprising a carrier resin and carbon black, wherein the masterbatch has a density between 1.1 and 1.4 g/cm³ and a carbon black with a particle size range of less than 55 nm, and forming a pressure pipe.

Any of the above, wherein the base polymer has a density between 0.9490 and 0.9520 g/cm³.

Any of the above, wherein the masterbatch is 55-65% by weight of carrier resin and 35-45% by weight of carbon black. Any of the above, wherein the final concentration of the masterbatch in the high strength resin is 4.5-6.5% by weight.

In one of its embodiments, this disclosure provides a pipe resin comprising a bimodal high molecular weight HDPE that has been extruded with a masterbatch having a 35-45% by weight of carbon black loading and a high density polymeric carrier resin, the final pipe resin having 4.5-6.5 wt% of masterbatch (~2.5-4.2 wt% carrier resin) and 93.5-95wt% of bimodal high molecular weight HDPE. The masterbatch improves the properties of pipes made with the same bimodal high molecular weight HDPE, resulting in a pipe designation of PE112.

In another of its embodiments, this disclosure provides a pipe resin comprising a bimodal high molecular weight HDPE which has been extruded with a masterbatch having a 40% carbon black loading using carbon particles that are less than 25 nm and a masterbatch density of ~1.19 g/cm³, the pipe having a lower prediction limit of 11.24 MPa on an ISO9080 creep rupture curve at 20°C and 50 years, and a MRS of 11.2 MPa.

In one of its embodiments, this disclosure provides a pipe resin comprising bimodal high molecular weight high density polyethylene which has been mixed with a masterbatch comprising 35-45 wt% carbon black, such that the masterbatch is 5-6.5 wt% of the final resin. This resin can then be extruded as a pipe having a minimum required strength of 11.2 MPa and/or a lower prediction limit (LPL) of the long-term hydrostatic strength on an ISO 9080 creep rupture

In yet another of its embodiments, this disclosure provides a pipe resin comprising a bimodal high molecular weight high density polyethylene which has been extruded with a masterbatch having a 40 wt% carbon black loading using carbon particles that are less than 25 nm, and a masterbatch density of ~1.12 g/cm³, the pipe having a lower prediction limit of 11.30 MPa on an ISO 9080 creep rupture curve at 20°C and 50 years, and a MRS of 11.2 MPa.

Any of the above embodiments further include the resin being extruded as a pressure pipe having a uniform thicknesses in the range of about 0.05 inches (0.13 cm) to over 4 inches (10.2 cm), external diameters ranging from about 1 inch (2.54 cm) to about 8 feet (2.43 m) or greater, and a designation of PE112, without changes being made to the extrusion process.

Further, various ranges and/or numerical limitations may be expressly stated throughout the summary and detailed description. It should be understood that unless stated otherwise, it is intended that endpoints are to be interchangeable. Any ranges include iterative ranges of like magnitude falling within the expressly stated ranges or limitations.

### BRIEF DESCRIPTION OF THE DRAWINGS

FIG. 1 shows circumferential stress test for one embodiment (Example 1) of the presently disclosed resin at 20, 60 and 80°C. The LPL value for 50 hours on the 20°C regression line (circled) is 11.24 MPa.
FIG. 2 shows circumferential stress test for a second embodiment (Example 2) of the presently disclosed resin at 20, 60 and 80°C. The LPL value for 50 hours on the 20°C regression line (circled) is 11.30 MPa.

### DEFINITIONS AND TEST METHODS

A "material designation code" is used to identify the resins and pipes discussed herein. High performance HDPE resins are identified by a material designation code based on pressure testing procedures from either the ASTM or International Organization for Standardization (ISO). The final pipe may not have the same designation as the resin and is tested separately. The goal of the disclosed methods is to form pipes with PE112 designation.

The two pressure ratings methods used for HDPE pipes are ASTM D2837 and ISO 9080. The ASTM pressure rating method utilizes pipe Examples tested at a constant temperature with the linear log stress - log time regression line extrapolated to 100,000 hours (11 years), whereas the ISO utilizes pipe Examples that are tested at three different temperatures with the linear log stress - log time 20°C regression line extrapolated to 480,000 hours (50 years). However, both standard methods of testing are widely accepted in the industry. For the pipe specimens made with the resins disclosed herein, testing was performed using the ISO 9080:2012 protocol, unless otherwise noted.

The ISO designation (e.g. PE100 or PE112) informs a user of the pipe material and the long term behavior or lifetime of the pipe as predicted based on creep rupture data and curves, which establish the allowable hoop stress (circumferential stress) that a pipe can withstand, without failure. This is called the long-term hydrostatic strength (LTHS). The lower confidence level of the extrapolated value in the ISO 9080 test is called the lower prediction limit (LPL) of the long-term hydrostatic strength and the categorized value of the LPL is called the Minimum Required Strength (MRS). MRS simply refers to the categorized long-term hydrostatic strength in the circumferential, or hoop direction, for a given set of end use conditions.

Thus, the "ISO designation" is the name of the polymer (here PE) and the MRS *10. Thus, polyethylene resin having a LPL that falls between 11.2 and 12.5 MPa on the creep rupture curve (11.2 ≤ σ_{LPL} < 12.5) has a categorized value of 11.2, a MRS rating of 11.2 and a designation of PE112.

The LPL and subsequent MRS rating of the prepared exemplary pipes were determined in accordance with ISO 9080:2012 methodology using a 32 mm outer diameter inch pipe specimen with standard dimension ratio (SDR=outer diameter/minimum wall thickness) = 11. The pipe specimen was sealed with a predetermined internal pressure and immersed in a water bath at the specified temperature. The target designation for the presently disclosed resin and pipe is PE112, which has a LPL value of 11.2 ≤ σ_{LPL} < 12.5 MPa at 20°C and 50 years.

As used herein, the term "masterbatch" refers to a solid or liquid additive to plastic resins used to impart other properties to the resin. The masterbatch includes additives, such as carbon black, encapsulated during a heat process into a carrier resin, which is then cooled and cut into a granular or pellet shape. As masterbatches are already premixed compositions, their use alleviates the issues with the additive clumping or insufficient dispersion.

The addition of the carbon black masterbatch to the base polymer in the presently disclosed composition can be carried out via tumble blending pellets of the components (base resin and carbon black masterbatch) such that the final resin has a masterbatch concentration of 4.5-6.5% by weight, and then adding the components into the feed hopper of the pipe extruder. Alternatively, the carbon black masterbatch may be added to the base polymer while the composition is being extruded such that the carbon black is evenly distributed through the resin. In yet another alternative, the carbon black masterbatch may be added directly to the base resin during the pelletization process for the base polymer.

As used herein, the term "improved processability" may mean that extrudability (as measured by extruder head pressure and amps, or shear viscosity) is improved or stays the same as compared to a similar non-improved resin and/or resins with a PE100 rating.

Another property used to distinguish between the current generation of resin and the next generation of resin prepared by methods describe here may be the molecular weight of the extruded bimodal high molecular weight high density polyethylene, measured as the high load melt index (HLMI). The HLMI of the extruded HDPE may be in the range of about 5 dg/min to about 15 dg/min, alternatively in the range of about 6 dg/min to about 10 dg/min, alternatively in the range of about 6 dg/min to about 8.5 dg/min, and alternatively in the range of about 6 dg/min to about 8 dg/min.

All concentrations herein are weight percent (" wt%") unless otherwise specified.

The use of the word "a" or "an" when used in conjunction with the term "comprising" in the claims or the specification means one or more than one, unless the context dictates otherwise.

The term "about" means the stated value plus or minus the margin of error of measurement or plus or minus 10% if no method of measurement is indicated.

The use of the term "or" in the claims is used to mean "and/or" unless explicitly indicated to refer to alternatives only or if the alternatives are mutually exclusive.

The terms "comprise", "have", "include" and "contain" (and their variants) are open-ended linking verbs and allow the addition of other elements when used in a claim.

The phrase "consisting of" is closed, and excludes all additional elements.

The phrase "consisting essentially of" excludes additional material elements, but allows the inclusions of non-material elements that do not substantially change the nature of the disclosed compositions and/or methods.

The term "effective," as that term is used in the specification and/or claims, means adequate to accomplish a desired, expected, or intended result.

The following abbreviations are used herein:

| ABBREVIATION | TERM |
|---|---|
| CMA | compound moisture absorption |
| HDPE | high density polyethylene |
| HLMI | high load melt index |
| ISO | International Standards Organization |
| LPL | lower prediction limit |
| LTHS | long-term hydrostatic strength |
| MB | masterbatch |
| MI | melt index |
| MRS | Minimum Required Strength |
| MW | molecular weight |
| MWD | molecular weight distribution |
| PE | polyethylene |
| PP | polypropylene |
| PPI | Plastics Pipe Institute |
| SCGR | slow crack growth resistance |
| UV | ultraviolet |

### DESCRIPTION OF EMBODIMENTS OF THE DISCLOSURE

This disclosure provides pipe resin compositions having improved physical properties compared to other high density polyethylene pipe resins, such as the current generation of PE100 rated pipes. The extruded resin may be useful in forming pipes having a MRS rating of 11.2 MPa, or a lower prediction limit at 20°C and 50 years between 11.2 MPa and 12.5 MPa based on an ISO 9080:2012 creep rupture curve, or a PE112 designation. Further, the extruded resin may be useful in preparing pipes that have approximately 10% lower thickness than an equivalent PE100 for a given nominal pressure.

The current generation of HDPE pressure pipe resin combines a high molecular weight HDPE base polymer with a carbon black masterbatch. The resulting pipes have an ISO material designation code of PE100, which means the pipes are composed of PE and have a minimum required strength (MRS) rating of 10.0 MPa, i.e. the lower prediction limit (LPL) is between 10 and 11.2 MPa on the ISO 9080 creep rupture curve at 20°C and 50 years. This resin tends to create flexible, corrosion-free pipes that have a service life of up to 100 years. However, improvements are always needed to create even stronger and longer lasting pipes.

The pipe resin disclosed herein comprises a bimodal, high molecular weight, high density polyethylene as a base polymer and a high density polyethylene masterbatch loading with carbon black. One or both of these components have been optimized to increase the MRS rating of the resulting pipe to PE112, as well as improve other performance properties of the pressure pipe, while allowing users to light-weight their pipes. A PE112 pipe designation means the MRS rating is 11.2 MPa and the LPL is between 11.2 and 12.5 MPa.

The presently disclosed method modifies the base polymers and/or carbon black masterbatches used in PE100 pipes to create this new generation of PE112 pipe resins by changing the density and/or molecular weight of the base polymer without changing the masterbatch used in the current generation of pressure pipes; or by changing the density and/or molecular weight of the carrier resin in the masterbatch while keeping the carbon black and base polymer used in the current generation of pressure pipes the same. Any combination of these changes to the base polymer or carrier resin may also yield resins capable of producing the desired PE112 pipes.

The masterbatch may be modified to create the new generation of pipes instead of the base polymer, as this allows a user to create pressure pipes with "standard" properties, as well as the next generation pipes, without having to develop a new reactor grade of the base polymer.

**Base polymer:** As mentioned above, the base polymer used in the presently disclosed pipe resin is a bimodal high molecular weight, high density polyethylene. Bimodal polymers are resins based on the combination of two polymers, a high molecular weight polymer and a low molecular weight polymer. Polyethylene (PE) resin compositions comprised of relatively higher and lower molecular weight components and having a bimodal molecular weight distribution (MWD) have been disclosed for pipe applications. Such resins, produced using various tandem reactor polymerization processes, have an acceptable balance of strength, stiffness, stress crack resistance and processability as a result of the contributions of the different molecular weight PE species.

The base bimodal high molecular weight HDPE used in the practice of this disclosure may have a density between 0.942 and 0.956 g/cm³ (at 23°C), or between 0.947 and 0.952 g/cm³ (at 23°C), or 0.949 g/cm³ (at 23°C). The bimodal HDPE base polymer may have a pipe material designation of PE3608 or PE4710 per Plastics Pipe Institute standards. The bimodal HDPE base may also have an HLMI (190°C/21.6 kg) between about 6.0 g/min. to about 4.0 g/min.

The bimodal high molecular weight HDPE base polymer may also be prepared as described in U.S. Pat. No. 9,249,286. Altematively, the commercially available Alathon^{®} products from LyondellBasell (Houston, TX) can be used as the base polymer. These products have a density range of about 0.947-0.9520 g/cm³. Alathon^{®} L4904 can be used in the present compositions. Alathon^{®} L4904 has a melt index (190°C/2.16 kg) of about 0.04 g/10 min., an HLMI (190°C/21.6 kg) of about 7.0 g/min., a density of about 0.949 g/cm³ (23°C), a flexural modulus of about 146,000 psi (1007 MPa; 2% secant), a tensile stress at break of about 5100 psi, a tensile stress at yield of about 3500 psi, and a tensile elongation at break of about 800%. Compared to standard grades, Alathon^{®} L4904 exhibits improved melt strength and resistance to slow crack growth. Further, Alathon^{®} L4904 has been used in PE100 rated pipes and can be combined with a masterbatch described herein to produce resins with PE112 ratings without having to change reactor variables.

**Masterbatch:** The carbon black masterbatch in the presently disclosed pipe resin has a nominal carbon black loading of about 35-45 weight %, with the remaining 55-65% of the composition being a polymeric carrier resin. Ideally, the final pipe resin is 5-6.5% by weight of masterbatch, which is about 2.5-4.2% carrier resin, and 93.5-95% by weight of base polymer. As such, the carrier resin in the masterbatch can be chosen to match the base polymer of the pipe. Alternatively, the carrier resin does not match the base polymer but still blends well with the bimodal HDPE. Ideally, the carrier resin is HDPE, a linear low density polyethylene, or a medium density polyethylene. Alternatively, the carrier resin can be a high density polyethylene with high molecular weight.

The present inventive resin can contain masterbatches having a density that is at least 1% higher than that of masterbatches used in PE100 rated pipes. Alternatively, the density may be at least 1.5% higher or 2% higher than the masterbatches used in PE100 rated pipe resins.

Any carbon black can be used in the masterbatch. In one aspect, the carbon black particles may be a "p-type", which is a specialty black with tight product specifications in order to meet stringent performance requirements for critical applications requiring exceptional purity. This grade of carbon black has a particle size of 20-25 nm, has exceptional ultraviolet (UV) weathering and low compound moisture absorption (CMA) with extremely low levels of sulfur, ash and grit ensuring best-in-class performance in regulated pressure pipes. It also has broad approval for food contact and potable water applications. Other types of carbon black particles, such as RCF and HAF, can also be used in the presently described masterbatches.

In one aspect, the carbon black particles are less than 55 nm in size. Alternatively, they can be between 10 and 30 nm. In yet another alternative, the carbon black is less than 25 nm.

While any number of the above variables can be modified to produce an improved pressure pipe, optimizing the masterbatch variables are preferred as this allows a user to create pressure pipes with "standard" properties or a PE100 designation, as well as the next generation pipes with improved properties, without having to develop a new reactor grade of the base polymer.

### EXAMPLES

The base polymer and masterbatches in the following examples were tumble blended such that the final resin has a 4.5 to 6.5% masterbatch concentration. The resin was then added components into the feed hopper of the pipe extruder and extruded as pipe specimens with nominal dimensions of 32 x 3 mm for further characterization.

### Example 1

Example 1 was created by blending a commercially available bimodal high molecular weight HDPE base polymer (Alathon^{®} L4904; LyondellBasell, Houston, TX) with a commercially available masterbatch having a 40% loading of carbon black (PLASBLAK^{®} HD2776; Cabot Corp., Boston, MA). The amount of masterbatch in Example 1 was 5.90% by weight with the remaining 94.1% by weight being the base polymer.

This base polymer was chosen as it has been used in the present generation of PE100 pipes and its use in the present disclosure would negate the need to create a new reactor grade. L4904 has a tensile strength at yield of about 3500 psi, an elongation at break of >700%, a flexural modulus of 146,000 psi (2% secant, 16:1 span:depth, 0.5 in/min), and a PENT slow crack growth of >500 hours, all of which make L4904 an ideal polymer for pressure pipes.

The chosen masterbatch uses a HDPE carrier resin so that it mixes well with polyethylene-based pipe resins, and has a density of 1.19 g/cm³ and a HLMI of 40 g/10 min (at 21.6 kg/190°C). The size of the carbon particles in the chosen masterbatch was less than 25 nm. The density of the masterbatch carrier resin is higher than the medium density masterbatches used in PE100 rated resin.

Multiple pipe specimens from the resulting Example 1 resin were extruded through a die for further testing.

First, hydrostatic pressure testing according to ISO1167:2006 was performed on the Example 1 pipe specimens. This method uses deionized water on the inside and on the outside of the pipe specimens to test their response to pressure, including resistance to internal pressure, at a constant temperature of 20, 60 and 80°C. The accuracy of the temperature and the pressure were maintained at ±1°C and +2/-1 %, respectively. The measurements of the wall thickness were accurate within ±0.01 mm and the diameters within ±0.1 mm. No unusual behaviors were observed during the hydrostatic pressure testing for the Example 1 specimens nor were problematic failures observed.

Next, a series of circumferential stress tests were performed per the methods set forth in ISO 9080:2012 to determine the strength and long term behavior of Example 1. ISO 9080 is used for long-term predictive performance of pipe resins. The test determines the pipe specimens' ability to withstand a variety of hoop stress without fracturing at different temperatures and lengths of time. Then, a regression is applied to the data to extrapolate an estimate of the amount of stress that can be withstood in the future. While multiple temperatures and times are tested under the ISO 9080 protocol, the 50 years test at 20°C is used to determine the rating or designation of the pipe.

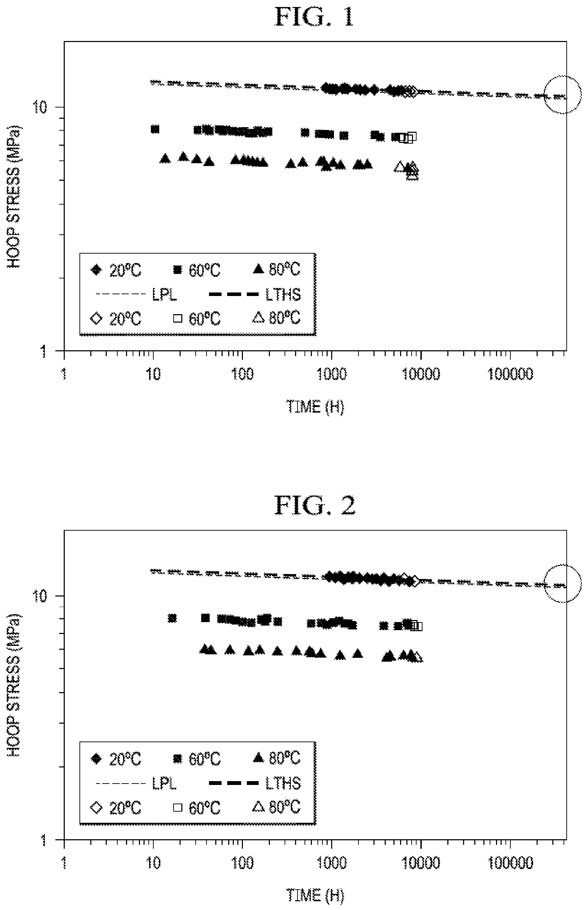

The hoop test results for 20, 60, and 80°C are shown in FIG. 1, along with the standard extrapolation regression plots for LTHS and LPL. The regression formulas and constants are laid out in ISO 9080:2012 and need not be repeated here.

FIG. 1 displays results for both On Test (open data points) and Ductile failures (solid points) stress results for each temperature. Only data points that were used in the regression are shown. The multiple linear regression analysis for the LPL and LTHS was performed using Pipeson Analyzer^{®} software from Pipeson (Sweden). The regression methods allow for a prediction of the service life at a given stress and temperature, and a minimum required strength rating assigned to PE resins for 50 years and 20°C.

By virtue of its LPL value of 11.24 MPa at 20°C and 50 years (black circle), Example 1's specimens was determined to have a MRS rating of 11.2 MPa. Therefore, this resin was designated PE112 according to ISO 12162:2009.

Table 1 displays extrapolated strength values for the LTHS and the estimated LPL for Example 1 at selected times for the three temperatures, with the LPL for the MRS rating in bold font.

**TABLE 1: Extrapolated Strength Values For Example 1**

| **TIME** | **σ_{LTHS} [MPa]** | | | **σ_{LPL} [MPa]** | | |
|---|---|---|---|---|---|---|
| | 20°C | 60°C | 80°C | 20°C | 60°C | 80°C |
| 10 h | 13.172 | 8.613 | 6.581 | 12.935 | 8.417 | 6.407 |
| 100 h | 12.781 | 8.277 | 6.285 | 12.559 | 8.089 | 6.121 |
| 1000 h | 12.402 | 7.953 | 6.002 | 12.189 | 7.771 | 5.845 |
| 10 000 h | 12.033 | 7.642 | - | 11.824 | 7.461 | - |
| 100 000 h | 11.676 | - | - | 11.464 | - | - |
| 50 yrs | 11.452 | - | - | 11.237 | - | - |
| 100 yrs | 11.349 | - | - | 11.131 | - | - |

From Example 1, it was determined that PE112 rated pressure pipes can be formed using the same base polymers as lower strength rated pipes such as PE80 and PE100. This saves time and cost in that pipes with different strength ratings can be created without having to change the reactor grade. Rather, a masterbatch or other additive can be added during the extrusion process to quickly improve the resin to the PE112 pipes, leaving the downstream machinery unaffected.

### Example 2

To confirm that the same base polymers for PE100 pipes can be used to create PE112 pipes, the same bimodal high molecular weight HDPE in Example 1 (Alathon^{®} L4904) was mixed with a different masterbatch (PECB4025A; Beijing BeiHua Gaoke New-Tech Co., China). The amount of masterbatch in Example 2 was 5.70% by weight with the remaining 94.3% by weight being the base polymer.

The masterbatch chosen for Example 2 had a nominal carbon black loading of 40%, and the size of the carbon particles was less than 25 nm.

This masterbatch also uses a HDPE carrier resin, so it will blend well with the L4904 base polymer. The density of the second chosen masterbatch was 1.12 g/cm³ with an HLMI value of 60 g/10 min (at 21.6 kg/190°C). Thus, this masterbatch will improve the ability to extrude Example 2 while retaining the ability to form the higher strength PE112 pipes.

The masterbatch was also chosen because it was specifically designed for use in the manufacture of black PE80 and PE100 pipe compounds. However, it is believed that the higher density of the carrier resin would allow for the creation of PE112 pipes using a bimodal high molecular weight HDPE like L4904.

As before, multiple pipe specimens from the resulting Example 2 resin were extruded and underwent further pressure and strength testing according to ISO 1167:2006 and ISO 9080:2012.

The hoop test results for 20, 60, and 80°C are shown in FIG. 2, along with the standard regression for the LTHS and LPL estimates. By virtue of its LPL value of 11.30 MPa at 20°C and 50 years (black circle), Example 2 was also determined to have a MRS rating of 11.2 MPa. It too can be designated as PE112 according to ISO 12162:2009.

Table 2 displays the extrapolated strength values for the LTHS and the estimated LPL for Example 2 at selected times for the three temperatures. For comparison, Applicant notes that the LPL at 20°C for Example 2 decreased at a lower rate than that of Example 1. By 100,000h, Example 1 had decreased to 11.464 MPa whereas Example 2 was 11.504 MPa.

| **TABLE 2: Extrapolated Strength Values For Example 2** | | | | | | |
|---|---|---|---|---|---|---|
| **TIME** | **σ_{LTHS} [MPa]** | | | **σ_{LPL} [MPa]** | | |
| | 20°C | 60°C | 80°C | 20°C | 60°C | 80°C |
| 10 h | 13.042 | 8.561 | 6.516 | 12.799 | 8.335 | 6.333 |
| 100 h | 12.700 | 8.262 | 6.252 | 12.473 | 8.066 | 6.079 |
| 1 000 h | 12.367 | 7.973 | 6.998 | 12.148 | 7.782 | 5,831 |
| 10 000 h | 12.043 | 7.694 | - | 11.825 | 7.503 | - |
| 100 000 h | 11.728 | - | - | 11.504 | - | - |
| 50 yrs | 11.530 | - | - | **11.300** | - | - |
| 100 yrs | 11.438 | - | - | 11.204 | - | - |

The above examples show that it is possible to use a standard PE100 base polymer to create stronger, improved pipe resin by changing the density and molecular weight of the masterbatch. A series of masterbatches with these combinations can be developed for use with the L4904 base polymer. There can be an ability to tailor the properties of the masterbatch and carbon particles in the masterbatch to achieve improved resins with a PE112 rating.

Further, increasing the molecular weight and density of the base polymer will also increase the strength rating for the pipe resin to PE112. While there are considerations to creating a new base polymer, namely having to modify the reactors to switch to the new polymer, base polymers with slightly higher density (0.949 of L4904 v. a bimodal HDPE with 0.952 g/cm³) or slightly lower HLMI (from 7 g/min to 6 g/min at 190°C/21.6 kg) also result in improving the pipe resin designation. These base polymers can also be used with commercially available masterbatches that are used for PE100 pipes.
U.S. Pat. No. 9,249,286
ISO 11420: 1996, "Method for the assessment of the degree of carbon black dispersion in polyolefin pipes, fittings and compounds"
ISO 9080: 2012, "Plastics piping and ducting systems - Determination of the long-term hydrostatic strength of thermoplastics materials in pipe form by extrapolation"
ISO 1167: 2006, "Thermoplastics pipes, fittings and assemblies for the conveyance of fluids -- Determination of the resistance to internal pressure"
ISO 12162:2009, "Thermoplastics materials for pipes and fittings for pressure applications -- Classification, designation and design coefficient"
ASTM D2837-13e1, "Standard Test Method for Obtaining Hydrostatic Design Basis for Thermoplastic Pipe Materials or Pressure Design Basis for Thermoplastic Pipe Products"

## Claims

1. A high strength resin comprising:
a. a bimodal, high molecular weight, high density polyethylene base polymer having a density between 0.947 and 0.952 g/cm³; and
b. a masterbatch comprising a carrier resin and carbon black, said masterbatch having a density between 1.1 and 1.4 g/cm³, wherein said carbon black has a particle size range of less than 55 nm;
wherein said high strength resin has a minimum required strength (MRS), measured according to ISO 9080:2012 of at least 11.2 MPa.

2. The high strength resin of claim 1, wherein said masterbatch is 55-65% by weight of carrier resin and 35-45% by weight of carbon black.

3. The high strength resin of claim 1, wherein said carrier resin is polyethylene or high density polyethylene.

4. The high strength resin of claim 1, wherein said base polymer has a density between 0.9490 and 0.9520 g/cm³.

5. The high strength resin of claim 1, wherein the final concentration of said masterbatch in said high strength resin is 4.5-6.5% by weight.

6. The high strength resin of claim 1, wherein said base polymer has a density of 0.949 g/cm³, said masterbatch has a density of 1.19 g/cm³, said carbon black has a particle size that is less than 25 nm, and said masterbatch has a 40% carbon loading.

7. The high strength resin of claim 1, wherein said base polymer has a density of 0.949 g/cm³, said masterbatch has a density of 1.12 g/cm³, said carbon black has a particle size that is less than 25 nm, and said masterbatch has a 40% carbon loading.

8. A method comprising:
a. extruding a bimodal, high molecular weight, high density polyethylene base polymer having a density between 0.947 and 0.952 g/cm³ in the presence of a masterbatch comprising a carrier resin and carbon black, said masterbatch having a density between 1.1 and 1.4 g/cm³, wherein said carbon black has a particle size range of less than 55 nm;
b. forming a pressure pipe having a minimum required strength (MRS), measured according to ISO 9080:2012 of 11.2 MPa.

9. The method of claim 8, wherein said masterbatch is 55-65% by weight of carrier resin and 35-45% by weight of carbon black.

10. The method of claim 8, wherein said base polymer has a density of 0.949 g/cm³, said masterbatch has a density of 1.19 g/cm³, said carbon black has a particle size that is less than 25 nm, and said masterbatch has a 40% carbon loading.

11. The method of claim 8, wherein said base polymer has a density of 0.949 g/cm³, said masterbatch has a density of 1.12 g/cm³, said carbon black has a particle size that is less than 25 nm, and said masterbatch has a 40% carbon loading.

12. A pressure pipe having a minimum required strength (MRS) measured according to ISO 9080:2012 of 11.2 MPa prepared by a method comprising:
a. extruding a bimodal, high molecular weight, high density polyethylene base polymer having a density between 0.947 and 0.952 g/cm³ in the presence of a masterbatch comprising a carrier resin and carbon black, said masterbatch having a density between 1.1 and 1.4 g/cm³, wherein said carbon black has a particle size range of less than 55 nm; and,
b. forming a pressure pipe.

13. The method of claim 12, wherein said masterbatch is 55-65% carrier resin and 35-45% carbon black.

14. The method of claim 12, wherein said base polymer has a density of 0.949 g/cm³, said masterbatch has a density of 1.19 g/cm³, said carbon black has a particle size that is less than 25 nm, and said masterbatch has a 40% carbon loading.

15. The method of claim 12, wherein said base polymer has a density of 0.949 g/cm³, said masterbatch has a density of 1.12 g/cm³, said carbon black has a particle size that is less than 25 nm, and said masterbatch has a 40% carbon loading.

## Patentansprüche

1. Hochfestes Harz, umfassend:
a. ein bimodales Polyethylenbasispolymer mit hohem Molekulargewicht und hoher Dichte, das eine Dichte zwischen 0,947 und 0,952 g/cm³ hat; und
b. ein Masterbatch, umfassend ein Trägerharz und Ruß, wobei das Masterbatch eine Dichte zwischen 1,1 und 1,4 g/cm³ hat, wobei der Ruß einen Partikelgrößenbereich von weniger als 55 nm hat;
wobei das hochfeste Harz eine erforderliche Mindestfestigkeit (MRS), gemessen gemäß ISO 9080:2012, von mindestens 11,2 MPa hat.

2. Hochfestes Harz nach Anspruch 1, wobei das Masterbatch 55 bis 65 Gew.% Trägerharz und 35 bis 45 Gew.% Ruß ist.

3. Hochfestes Harz nach Anspruch 1, wobei das Trägerharz Polyethylen oder Polyethylen mit hoher Dichte ist.

4. Hochfestes Harz nach Anspruch 1, wobei das Basispolymer eine Dichte zwischen 0,9490 und 0,9520 g/cm³ hat.

5. Hochfestes Harz nach Anspruch 1, wobei die endgültige Konzentration des Masterbatches in dem hochfesten Harz 4,5 bis 6,5 Gew.% beträgt.

6. Hochfestes Harz nach Anspruch 1, wobei das Basispolymer eine Dichte von 0,949 g/cm³ hat, das Masterbatch eine Dichte von 1,19 g/cm³ hat, der Ruß eine Partikelgröße hat, die unter 25 nm liegt, und das Masterbatch eine Kohlenstoffbeladung von 40 % aufweist.

7. Hochfestes Harz nach Anspruch 1, wobei das Basispolymer eine Dichte von 0,949 g/cm³ hat, das Masterbatch eine Dichte von 1,12 g/cm³ hat, der Ruß eine Partikelgröße hat, die unter 25 nm liegt, und das Masterbatch eine Kohlenstoffbeladung von 40 % aufweist.

8. Verfahren, umfassend:
a. Extrudieren eines bimodalen Polyethylenbasispolymers mit hohem Molekulargewicht und hoher Dichte, das eine Dichte zwischen 0,947 und 0,952 g/cm³ hat, in Gegenwart eines Masterbatches, das ein Trägerharz und Ruß umfasst, wobei das Masterbatch eine Dichte zwischen 1,1 und 1,4 g/cm³ hat, wobei der Ruß einen Partikelgrößenbereich kleiner als 55 nm hat;
b. Bilden eines Druckrohrs mit einer erforderlichen Mindestfestigkeit (MRS), gemessen gemäß ISO 9080:2012, von 11,2 MPa.

9. Verfahren nach Anspruch 8, wobei das Masterbatch 55 bis 65 Gew.% Trägerharz und 35 bis 45 Gew.% Ruß ist.

10. Verfahren nach Anspruch 8, wobei das Basispolymer eine Dichte von etwa 0,949 g/cm³ hat, das Masterbatch eine Dichte von 1,19 g/cm³ hat, der Ruß eine Partikelgröße hat, die unter 25 nm liegt, und das Masterbatch eine Kohlenstoffbeladung von 40 % aufweist.

11. Verfahren nach Anspruch 8, wobei das Basispolymer eine Dichte von 0,949 g/cm³ hat, das Masterbatch eine Dichte von 1,12 g/cm³ hat, der Ruß eine Partikelgröße hat, die unter 25 nm liegt, und das Masterbatch eine Kohlenstoffbeladung von 40 % aufweist.

12. Druckrohr mit einer erforderlichen Mindestfestigkeit (MRS), gemessen gemäß ISO 9080:2012, von 11,2 MPa, das nach einem Verfahren hergestellt ist, welches umfasst:
a. Extrudieren eines bimodalen Polyethylenbasispolymers mit hohem Molekulargewicht und hoher Dichte, das eine Dichte zwischen 0,947 und 0,952 g/cm³ hat, in Gegenwart eines Masterbatches, das ein Trägerharz und Ruß umfasst, wobei das Masterbatch eine Dichte zwischen 1,1 und 1,4 g/cm³ hat, wobei der Ruß einen Partikelgrößenbereich kleiner als 55 nm hat; und
b. Bilden eines Druckrohrs.

13. Verfahren nach Anspruch 12, wobei das Masterbatch 55 bis 65 % Trägerharz und 35 bis 45 % Ruß ist.

14. Verfahren nach Anspruch 12, wobei das Basispolymer eine Dichte von etwa 0,949 g/cm³ hat, das Masterbatch eine Dichte von 1,19 g/cm³ hat, der Ruß eine Partikelgröße hat, die unter 25 nm liegt, und das Masterbatch eine Kohlenstoffbeladung von 40 % aufweist.

15. Verfahren nach Anspruch 12, wobei das Basispolymer eine Dichte von 0,949 g/cm³ hat, das Masterbatch eine Dichte von 1,12 g/cm³ hat, der Ruß eine Partikelgröße hat, die unter 25 nm liegt, und das Masterbatch eine Kohlenstoffbeladung von 40 % aufweist.

## Revendications

1. Résine à haute résistance comprenant :
a. un polymère de base de polyéthylène haute densité bimodal, de poids moléculaire élevé, présentant une masse volumique située entre 0,947 et 0,952 g/cm³ ; et
b. un mélange maître comprenant une résine support et du noir de carbone, ledit mélange maître présentant une masse volumique située entre 1,1 et 1,4 g/cm³, ledit noir de carbone présentant une plage de grosseurs de particule inférieure à 55 nm ;
ladite résine à haute résistance présentant une résistance requise minimale (RRM), mesurée selon la norme ISO 9080:2012, d'au moins 11,2 MPa.

2. Résine à haute résistance selon la revendication 1, ledit mélange maître étant constitué par 55 à 65 % en poids de résine support et 35 à 45 % en poids de noir de carbone.

3. Résine à haute résistance selon la revendication 1, ladite résine support étant du polyéthylène ou du polyéthylène haute densité.

4. Résine à haute résistance selon la revendication 1, ledit polymère de base présentant une masse volumique située entre 0,9490 et 0,9520 g/cm³.

5. Résine à haute résistance selon la revendication 1, la concentration finale dudit mélange maître dans ladite résine à haute résistance étant de 4,5 à 6,5 % en poids.

6. Résine à haute résistance selon la revendication 1, ledit polymère de base présentant une masse volumique de 0,949 g/cm³, ledit mélange maître présentant une masse volumique de 1,19 g/cm³, ledit noir de carbone présentant une grosseur de particule inférieure à 25 nm et ledit mélange maître présentant une charge de carbone de 40 %.

7. Résine à haute résistance selon la revendication 1, ledit polymère de base présentant une masse volumique de 0,949 g/cm³, ledit mélange maître présentant une masse volumique de 1,12 g/cm³, ledit noir de carbone présentant une grosseur de particule inférieure à 25 nm et ledit mélange maître présentant une charge de carbone de 40 %.

8. Procédé comprenant :
a. l'extrusion d'un polymère de base de polyéthylène haute densité bimodal, de poids moléculaire élevé, présentant une masse volumique située entre 0,947 et 0,952 g/cm³ en présence d'un mélange maître comprenant une résine support et du noir de carbone, ledit mélange maître présentant une masse volumique située entre 1,1 et 1,4 g/cm³, ledit noir de carbone présentant une plage de grosseurs de particule inférieure à 55 nm ;
b. la formation d'une conduite de pression présentant une résistance requise minimale (RRM), mesurée selon la norme ISO 9080:2012, de 11,2 MPa.

9. Procédé selon la revendication 8, ledit mélange maître étant constitué par 55 à 65 % en poids de résine support et 35 à 45 % en poids de noir de carbone.

10. Procédé selon la revendication 8, ledit polymère de base présentant une masse volumique de 0,949 g/cm³, ledit mélange maître présentant une masse volumique de 1,19 g/cm³, ledit noir de carbone présentant une grosseur de particule inférieure à 25 nm et ledit mélange maître présentant une charge de carbone de 40 %.

11. Procédé selon la revendication 8, ledit polymère de base présentant une masse volumique de 0,949 g/cm³, ledit mélange maître présentant une masse volumique de 1,12 g/cm³, ledit noir de carbone présentant une grosseur de particule inférieure à 25 nm et ledit mélange maître présentant une charge de carbone de 40 %.

12. Conduite de pression présentant une résistance requise minimale (RRM), mesurée selon la norme ISO 9080:2012, de 11,2 MPa, préparée par un procédé comprenant :
a. l'extrusion d'un polymère de base de polyéthylène haute densité bimodal, de poids moléculaire élevé, présentant une masse volumique située entre 0,947 et 0,952 g/cm³ en présence d'un mélange maître comprenant une résine support et du noir de carbone, ledit mélange maître présentant une masse volumique située entre 1,1 et 1,4 g/cm³, ledit noir de carbone présentant une plage de grosseurs de particule inférieure à 55 nm ; et,
b. la formation d'une conduite de pression.

13. Procédé selon la revendication 12, ledit mélange maître étant constitué par 55 à 65 % de résine support et 35 à 45 % de noir de carbone.

14. Procédé selon la revendication 12, ledit polymère de base présentant une masse volumique de 0,949 g/cm³, ledit mélange maître présentant une masse volumique de 1,19 g/cm³, ledit noir de carbone présentant une grosseur de particule inférieure à 25 nm et ledit mélange maître présentant une charge de carbone de 40 %.

15. Procédé selon la revendication 12, ledit polymère de base présentant une masse volumique de 0,949 g/cm³, ledit mélange maître présentant une masse volumique de 1,12 g/cm³, ledit noir de carbone présentant une grosseur de particule inférieure à 25 nm et ledit mélange maître présentant une charge de carbone de 40 %.
